# EUROPEAN PATENT APPLICATION

(11) **EP 2 328 021 A1**
(43) Date of publication of application: **01.06.2011**
(21) Application number: 10014604.2
(22) Date of filing: 15.11.2010
(51) Int. Cl.: G03B 21/56

(54) **Control apparatus for a motorized screen of a videoprojection system**

(30) Priority: 20.11.2009 IT AN20090093
(71) Applicant: Seav S.r.l., 60027 Osimo (AN) (IT)
(72) Inventor: Restaneo, Antonio, 60027 Osimo (Ancona) (IT)
(74) Representative: Cerreta, Caterina

(57) **Abstract**

Apparatus (1) for controlling a motor-driven projection screen (2) of a video projection system equipped with a video projector (3), comprising means (4; 13) for selective operation of the screen drive means; sensor means (5) for detecting the operating state of the video projector (3); and means of communication (6; 11, 12) designed to activate the exchange of information between the sensor means (5) and the means (4; 13) for operation of the screen drive means in such a way as to automatically prepare the screen (2) for projection, or vice versa to bring the projection screen (2) to a non-operating state.

## Description

This invention relates to video projection systems equipped with a motor-driven roll-up projection screen, and in particular it relates to an apparatus for automatically controlling the projection screen.

It is known that video projection systems with a conventional structure have separate control means for switching the video projector on/off and for rolling up/unrolling the projection screen. Normally, the former comprise a video projector on/off push-button which may be located directly on the structure of the equipment and/or may be located on a portable radio remote control for remotely controlling the equipment. A similar structure is often used for the motor-driven screen, which may have a fixed control push-button, and, alternatively, or in addition, a radio remote control for remotely controlling it.

Such a double control system is inconvenient to use because, in the case of fixed controls, which are connected to the structures of the video projector and of the motor-driven screen, it forces the user to move between one and the other and because in the case of two separate remote controls, two devices are required which, considering their portability, are not always positioned close to each other and are not always immediately traceable unless they are systematically returned to the same location.

Another disadvantage is the fact that mobile radio remote controls use batteries for independent power, which once flat incur costs for their waste disposal and may potentially harm the environment. The aim of this invention is to overcome said disadvantages by proposing, in accordance with the invention, a solution in which control of the projection screen is automatically controlled by the simultaneous operating state of the video projector.

Said result is achieved by an apparatus as described in one or more of the appended claims. The technical features of the invention, with reference to the above aims, are clearly described in the claims below, and its advantages are more apparent from the detailed description which follows, with reference to the accompanying drawings which illustrate a preferred embodiment of the invention provided merely by way of example without restricting the scope of the inventive concept, and in which:
- Figures 1 to 5 are schematic illustrations of the apparatus in accordance with the invention in a series of operating steps;

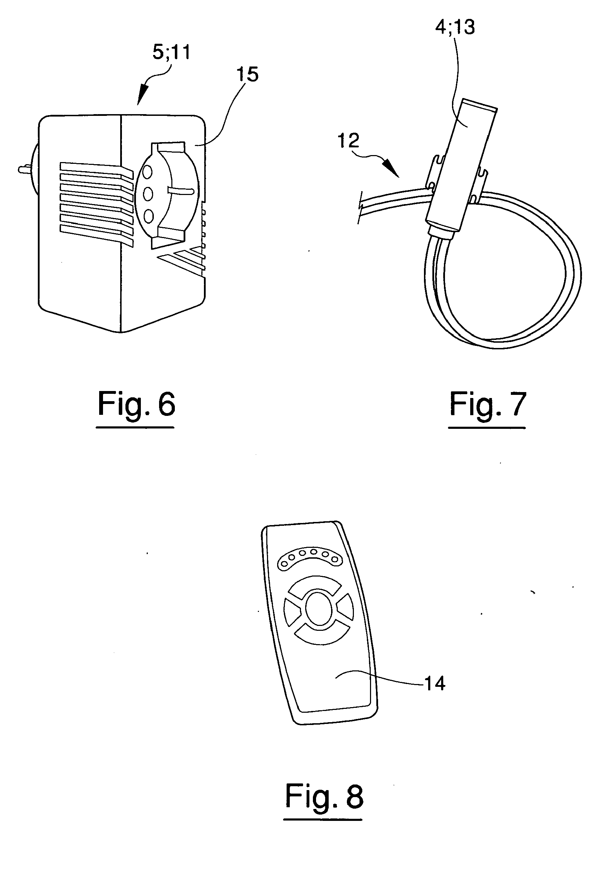

- Figures 6 to 8 are schematic illustrations of several component parts of the apparatus. With reference to the accompanying drawings, Figures 1 to 5 show in its entirety an apparatus 1 for automatically controlling a motor-driven projection screen 2 of a video projection system equipped with a video projector which is labelled 3 as a whole.

In particular, the apparatus 1 comprises: means 4, 13 for the selective operation of the screen 2 drive means; sensor means 5 for detecting the operating state of the video projector 3; and communication means 6, 11 and 12 designed to activate the exchange of information between the sensor means 5 and the means 4, 13 for operation of the screen 2 drive means in such a way as to automatically prepare the screen 2 for projection, or vice versa to bring the projection screen 2 to a non-operating state in which the screen 2 is rolled up on itself in a non-operating condition.

The video projector 3 is powered by an electrical network 7, to which it is connected in the conventional way by means of a cable 8, a plug 9 and a socket 10.

The sensor means 5, comprising electronic circuitry housed in a box-shaped body 15 and associated with the plug 9 of the power cable 8, being interposed between said plug and the socket 10 of the electrical network 7, are designed to detect the switching of electricity absorption by the video projector 3 from the electrical network 7.

The communication means 6 comprise at least one transmitter 11 and one receiver 12 which are interconnected by radio and are respectively associated: the former with the video projector 3, that is to say, preferably with the box-shaped body 15 connected to the socket 10; the latter in contrast being associated with the projection screen 2, that is to say, preferably with the structure 16 for rolling up the screen 2.

The receiver 12 is connected to a control unit 13 for the means 4 for operation of the screen 2 drive means.

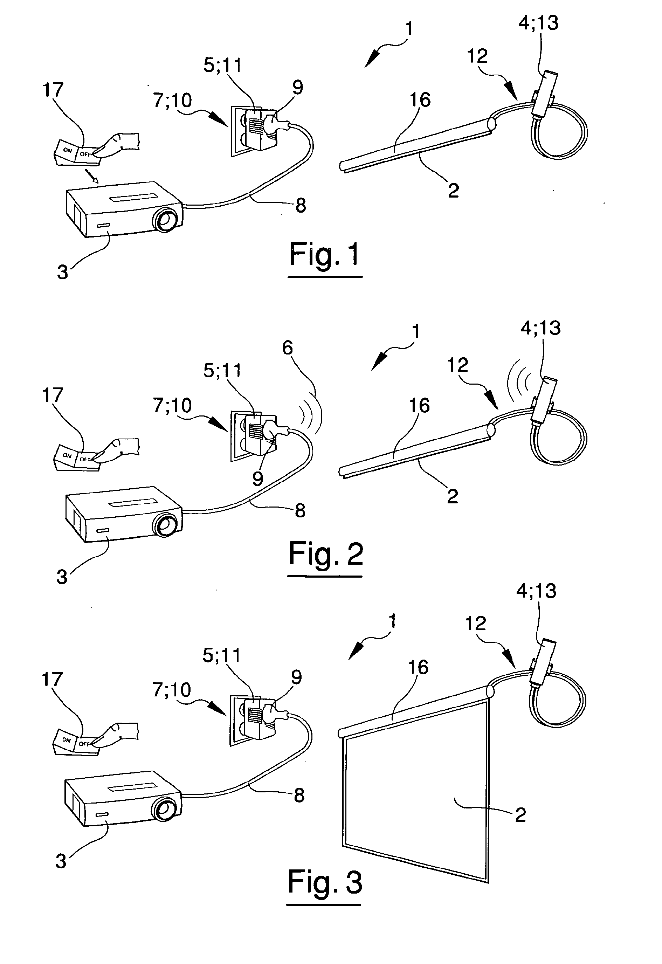

In practice, operation of the apparatus 1 may be described with reference to Figures 1 to 5. With reference to Figure 1, it should be noticed that when the user switches the switch 17 of the video projector 3, the sensor means 5 automatically detect a change in electricity absorption from the network 7.

The transmitter 11 [Figure 2] therefore sends the screen 2 receiver 12 a corresponding signal which, when appropriately processed by the control unit 13, issues the command to activate the drive means in such a way that the screen 2 is unrolled [Figure 3] and positioned in an operating state suitable for projection.

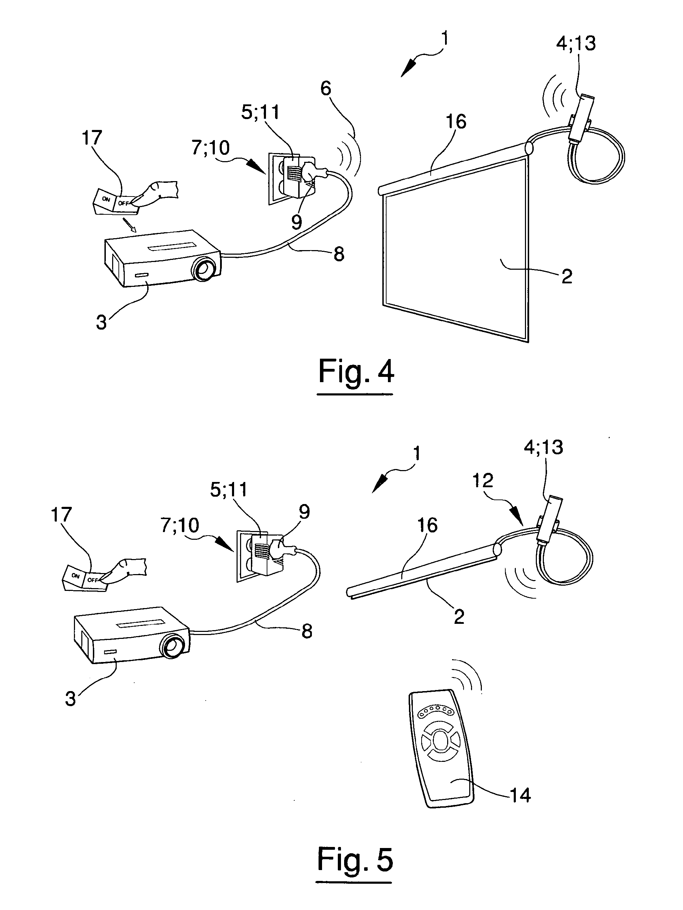

When the user has finished using the video projector 3, he switches off the video projector 3 by again switching the switch 17 [Figure 4].

The sensor means 5 detect a reduction in the absorption of electricity from the network 7 and consequently send a command to the receiver 12 which, by means of the control unit 13 and a new activation of the screen 2 drive means, automatically cause the screen 2 to move up again and be rolled up in the non-operating condition of Figure 5.

The apparatus 1 advantageously allows all functions of the video projector 3 and of the screen 2 to be controlled using a single switch 17. However, an optional remote control 14 may be provided for operating the screen 2 drive means in the conventional way if necessary.

The invention described above is susceptible of industrial application and may be modified and adapted in several ways without thereby departing from the scope of the inventive concept. Moreover, all details of the invention may be substituted by technically equivalent elements.

## Claims

1. An apparatus for controlling a motor-driven projection screen (2) of a video projection system equipped with a video projector (3), **characterised in that** it comprises means (4; 13) for selective operation of the screen (2) drive means; sensor means (5) for detecting the operating state of the video projector (3); and means of communication (6; 11, 12) designed to activate the exchange of information between the sensor means (5) and the means (4; 13) for operation of the screen (2) drive means in such a way as to automatically prepare the screen (2) for projection, or vice versa to bring the projection screen (2) to a non-operating state.

2. The apparatus according to claim 1, **characterised in that** the video projector (3) is powered by an electrical network (7).

3. The apparatus according to claim 1 or 2, **characterised in that** the sensor means (5) are designed to detect the switching of electricity absorption by the video projector (3) from the electrical network (7).

4. The apparatus according to claim 3, **characterised in that** the sensor means (5) are associated with a video projector (3) electrical power cable (8).

5. The apparatus according to claim 4, **characterised in that** the sensor means (5) are associated with a plug (9) of the power cable (8) and/or with a socket (10) of the electrical network (7).

6. The apparatus according to claim 1, **characterised in that** the means of communication (6; 11, 12) comprise at least one transmitter (11) and one receiver (12) which are interconnected by radio and are respectively associated with the video projector (3) and with the projection screen (2).

7. The apparatus according to claim 3 or 4, **characterised in that** at least one transmitter (11) is associated with the power cable (8) or with the plug (9) of the video projector (3).

8. The apparatus according to claim 6, **characterised in that** at least one receiver (12) is associated with a control unit (13) for the means (4) for selective operation of the screen (2) drive means.

9. The apparatus according to claim 1, **characterised in that** it comprises a remote control (14) for remotely controlling the switching of the state of the projection screen (2).
